(19) Europäisches Patentamt
European Patent Office
Office européen des brevets

(11) **EP 1 495 239 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(21) Anmeldenummer: **03722440.9**

(22) Anmeldetag: **10.04.2003**

(51) Int Cl.:
*F16G 13/12* (2006.01)    *E21C 29/04* (2006.01)

(86) Internationale Anmeldenummer:
**PCT/EP2003/003730**

(87) Internationale Veröffentlichungsnummer:
**WO 2003/087622 (23.10.2003 Gazette 2003/43)**

(54) **HOBELKETTENSTRANG MIT KETTENSCHLOSSGLIED**

PLANE CHAIN STRAND COMPRISING A CHAIN LOCK LINK

BRIN DE CHAINE DE RABOTAGE COMPORTANT UN MAILLON DE FERMETURE DE CHAINE

(84) Benannte Vertragsstaaten:
**CZ DE GB**

(30) Priorität: **12.04.2002 DE 10216461**

(43) Veröffentlichungstag der Anmeldung:
**12.01.2005 Patentblatt 2005/02**

(73) Patentinhaber: **DBT GmbH**
**44534 Lünen (DE)**

(72) Erfinder:
• **MERTEN, Gerhard**
  **44534 Lünen (DE)**
• **KLABISCH, Adam**
  **44319 Dortmund (DE)**
• **BERGHOFF, Jürgen**
  **59429 Holzwickede (DE)**
• **BENECKE, Rainer**
  **44229 Dortmund (DE)**

(74) Vertreter: **Althaus, Arndt et al**
**Patentanwälte,**
**Buschhoff Hennicke Althaus**
**Postfach 19 04 08**
**50501 Köln (DE)**

(56) Entgegenhaltungen:
| | |
|---|---|
| DE-A- 1 939 000 | DE-A- 2 726 235 |
| DE-A- 4 420 203 | DE-A- 19 901 232 |
| DE-C- 4 332 379 | GB-A- 693 734 |
| US-A- 4 134 255 | |

## Beschreibung

Die Erfindung betrifft einen Hobelkettenstrang mit Horizontalkettengliedern und Vertikalkettengliedern, deren Kettengliedschenkel über Kettengliedbögen verbunden sind und die wechselweise unlösbar ineinanderfassen, und mit einem zwei Kettenstrangenden verbindenden Kettenschloßglied, das zwei miteinander zugfest verriegelbare, an den Schenkeln die Teilungs- und Verriegelungsebene aufweisende Kettenschloßteile umfaßt.

Hobelketten bestehen bekanntermaßen aus einstückigen, ösenartigen Rundgliedern, die je zwei voneinander beabstandete, parallel zueinander verlaufende Kettengliedschenkel aufweisen, die über Kettengliedbögen verbunden sind. In einem Hobelkettenstrang greift jeweils ein Vertikalkettenglied mit seinem Kettengliedbogen in die ovale Innenöffnung zwischen den Kettengliedschenkeln und Kettengliedbögen eines Horizontalkettengliedes ein und es reihen sich wechselweise und unlösbar mehrere hundert Kettenglieder aneinander. Mit der Hobelkette wird ein untertägiger Gewinnungshobel im Streb hin- und herbewegt. Die Hobelkette wird hierbei in Kettenführungskanälen von Hobelführungsschüssen geführt, die z.B. an Kettenkratzförderern montiert sind, wie dies dem Fachmann bekannt ist.

Im untertägigen Bergbau werden zwei Gliederkettenstränge einer Hobelkette mittels eines sogenannten Kettenschlosses miteinander verbunden, das zwei Kettenschloßteile umfaßt, die miteinander zugfest verriegelbar bzw. voneinander lösbar sind und in ihren Schenkeln die Teilungs- bzw. Verriegelungsebene aufweisen. Derartige Kettenschlösser sind beispielsweise aus der DE 199 01 232 A1 oder DE 27 26 235 C3 bekannt. Bei dem aus der DE 27 26 235 C3 bekannten Kettenschloß sind zwei im wesentlichen W-förmige Kettenschloßteile unverlierbar mit einem zentralen Rundkettenglied verbunden und die beiden Kettenstrangenden der Hobelkette werden über U-förmige Einhängeteile, die mit den W-förmigen Kettenschloßteilen zusammenwirken und wie diese ihre Verriegelungs- und Teilungsebene in den Schenkeln aufweisen, zugfest angeschlossen. Da die Teilungs- und Verriegelungsebene bei den vorgenannten Kettenschloßteilen der Kettenschloßglieder durch deren Schenkel verläuft, sind die Kettenschloßteile im Schenkelbereich größer dimensioniert als der Drahtquerschnitt der Schenkel und Bögen der Horizontal- und Vertikalkettenglieder beträgt. Bei Verwendung der Hobelkette in Hobelführungsschüssen mit Kettenkanälen führt dies zu einem höheren Verschleiß der Kettenschlösser im Vergleich zum Verschleiß an den "normalen" Horizontal- und Vertikalkettengliedern.

Aus der DE 44 20 203 C2 ist ein gattungsgemäßes Kettenschloßglied mit Kettenschloßhälften mit jeweils runden Kettenschloßgliedbügen und flachen Gliederschenkeln bekannt. Die Gliedschenkel sind mit Verzahnungen für die Verriegelung der Kettenschloßhälften versehen und breiter als die Kettenschloßgliedbüge ausgeführt; zwischen den Flachschloßhälften ist ein Mittelstück mit Flachseiten eingetrieben, das mittels einer haarnadelförmigen Stabfeder und eines Sicherungsstiftes im Zwischenraum zwischen den flachen Gliederschenkeln eingesetzt ist. Die Stabfeder liegt in Nuten an den Innenschenkeln der Gliederschenkel der Kettenschloßhälften an.

Aus der DE 19 39 000 A1 ist eine Rundglieder-Zugkette für einen Hobel bekannt, bei der zur Entdrallung der Rundglieder-Zugkette kurze Abschnitte der Kette von beispielsweise sechs Kettengliedern aus Kettengliedern bestehen, die gleiche Materialstärke wie die anderen Kettenglieder, jedoch eine in Kettengliedebene vergrößerte Breite aufweisen. Die kurzen Kettenstrangabschnitte sind bevorzugt unmittelbar vor dem Hobel angeordnet, um nicht über das Kettenrad laufen zu müssen. Jeweils zwei der verbreiterten und unmittelbar miteinander verbundenen Kettenglieder können sich in der Kettenlängsachse um 60° zueinander verdrehen, um mit insgesamt sechs Kettengliedern einen Verdrallausgleich von 360° zu schaffen.

Aus der DE 43 32 379 C1 ist es bekannt, die über die Bodenfläche des Untertrums und/oder Obertrums schleifenden Vertikalglieder einer Fördererkette im Querschnitt und in der Breite um ein bestimmtes Maß stärker auszubilden als die Horizontalglieder, wodurch sich die Standzeit der Kette gegenüber Ketten aus Normkettengliedern erhöhen läßt. Alle Horizontal- und Vertikalkettenglieder sind untereinander gleich ausgebildet.

Untersuchungen der Anmelderin haben gezeigt, daß der höhere Verschleiß der Kettenschlösser auf ihre größere Dimensionierung in den die Teilungsebene aufweisenden Schenkeln zurückzuführen ist. Ferner kann, da im untertägigen Einsatz die Hobelführungsschüsse nicht optimal fluchtend zueinander ausgerichtet stehen sondern sich ständig in unterschiedlichen Abwinklungen zueinander befinden, eine übermäßige Beanspruchung der Kettenschlösser im Vergleich zu den anderen Horizontal-bzw. Vertikalkettengliedern in der Hobelkette selbst durch eine optimierte Anpassung der Kettenkanäle an die Dimensionierung der Kettenschlösser nicht vermieden werden. Die Wartungsintervalle für die Kettenschlösser sind daher bisher kürzer als für die Horizontal- und Vertikalkettengliedern.

Aufgabe der Erfindung ist es, einen Hobelkettenstrang mit Horizontal- sowie Vertikalkettengliedern und wenigstens einem Kettenschloßglied zu schaffen, bei welchem durch konstruktive Maßnahmen an der Hobelkette die höhere Beanspruchung des Kettenschlosses bzw. Kettenschloßgliedes minimiert bzw. vollständig vermieden wird.

Diese Aufgabe wird mit der in Anspruch 1 angegebenen Erfindung gelöst. Erfindungsgemäß ist vorgesehen, daß im Kettenstrang sowohl vor als auch hinter dem Kettenschloßglied jeweils wenigstens ein Kettensonderglied angeordnet ist, dessen Gliederschenkel eine äußere Breite und/oder eine äußere Dicke aufweisen, die gleich oder geringfügig größer ist als die äußere Breite bzw. äußere Dicke der Schenkel des zusammengesetzten Kettenschloßgliedes. Erfindungsgemäß wird mithin jeweils wenigstens ein dem Kettenschloßglied im untertägigen Einsatz vorauseilendes und ein ihm nachlaufendes Kettenglied der Hobelkette an die Außenkontur des Kettenschloßgliedes angepaßt, so daß die unvermeidbare größere Dimensionierung der Schenkel der Kettenschloßteile des Kettenschloßgliedes im Kettenstrang regelmäßig wiederkehrt und sich hinsichtlich des Auftretens von Verschleiß- und Abnutzungserscheinungen weniger stark an dem Kettenschloßglied auswirkt als dies in Hobelketten der Fall ist, bei welchen die dem Kettenschloßglied vor- und nacheilenden Kettenglieder in den Abmessungen der Außenkontur geringer als das Kettenschloßglied dimensioniert sind. Sofern die Kettensonderglieder in den Abmessungen der Gliederschenkel größer dimensioniert werden, was erfindungsgemäß bevorzugt wird, nehmen die Belastungen am Kettenschloßglied sogar ab, da die kräftigeren bzw. dickeren und breiteren Gliederschenkel der Kettensonderglieder das zwischen zwei Kettensondergliedern montierte Kettenschloßglied mit geringem Abstand zu den Begrenzungswänden in den Kettenführungskanälen führen.

In bevorzugter Ausgestaltung ist die Breite und/ oder Dicke der Gliederschenkel der Kettensonderglieder etwa 0 bis 5%, vorzugsweise 0 bis 2% größer als die entsprechende Breite oder Dicke der Schenkel des Kettenschloßgliedes. Gemäß einem Ausführungsbeispiel ist jeweils genau ein Kettensonderglied in gleicher Einbaulage wie das Kettenschloßglied unmittelbar vor und unmittelbar hinter dem Kettenschloßglied montiert. Alternativ können mehrere, insbesondere zwei bis fünf unmittelbar vor und unmittelbar hinter dem Kettenschloßglied angeordnete Kettenglieder in gleicher Einbaulage wie das Kettenschloßglied aus Kettensondergliedern bestehen. Weiter alternativ können in einer Hobelkette sämtliche Kettenglieder in der gleichen Einbaulage wie das Kettenschloßglied aus einem Kettensonderglied bestehen, während die anderen Kettenglieder aus Normalkettengliedern bestehen. Letztere Ausführungsform hat den Vorteil, daß bei einem verschleiß- oder kettenbruchbedingten Austausch einzelner Kettenglieder ein Kettenschloß an beliebiger Stelle im Hobelkettenstrang montiert werden kann, ohne daß dann dieses Kettenschloßglied einem höheren Verschleiß unterliegt, als dies bei einem Kettenschloßglied der Fall ist, das in einer vorbestimmten Position als erstes Kettenschloßglied zum Verbinden zweier Kettenstrangenden montiert wurde.

Bei einigen Hobelführungen oder Antrieben für Hobelketten kann von Vorteil sein, wenn zumindest das dritte und sechste Kettenglied vor und hinter dem Kettenschloß aus einem Kettensonderglied bestehen. Es versteht sich, daß dieses Kettenglied dann nicht in derselben Einbaulage, sondern in einer rechtwinklig hierzu angeordneten Einbaulage im Hobelkettenstrang liegt. Alternativ kann jeweils nur jedes dritte Kettenglied vor und hinter dem Kettenschloß aus einem Kettensonderglied bestehen.

Bei der insbesondere bevorzugen Ausführungsform bestehen zumindest die Kettensonderglieder aus geschmiedeten Kettengliedern, wobei die Kettensonderglieder insbesondere einstückig ausgebildet sein können. Alternativ zu einstückigen Kettensondergliedern können auch an den Gliederschenkeln der Kettensonderglieder Schleißstücke aufgesetzt, aufgebracht oder befestigt sein, so daß auch bestehende Hobelkettenstränge erfindungsgemäß nachgerüstet werden können und, falls die Schleißstücke übermäßig abgenutzt sind, gegen andere Schleißstücke ausgetauscht werden können. Die Schleißstücke können auch fest mit den Gliederschenkeln verbunden sein und z.B. durch Auftragsschweißen od.dgl aufgebracht werden.

Bei sämtlichen vorgenannten alternativen Ausführungsbeispielen wird besonders bevorzugt, wenn die Gliedbögen der Kettensonderglieder denselben Querschnitt, insbesondere denselben Durchmesser aufweisen wie der Querschnitt bzw. der Durchmesser der Gliedbögen der Kettenschloßteile und vorzugsweise auch der weiteren "normalen" Horizontal- bzw. Vertikalkettenglieder. Das Kettenschloßglied und die Kettensonderglieder unterscheiden sich dann nur in der Dimensionierung der Gliederschenkel bzw. Schenkel von den "normalen" Kettengliedern. Weiter vorzugsweise weisen die Gliedbögen der Kettensonderglieder außen denselben Krümmungsradius auf wie der Krümmungsradius der Gliedbögen des Kettenschloßgliedes und der Krümmungsradius der Horizontal- und Vertikalkettenglieder.

Das Kettenschloßglied und die Kettensonderglieder, mit denen das Kettenschloß vor stärkerem Verschleiß aufgrund erhöhter Reibung geschützt werden soll, können Gliederschenkel aufweisen, die über eine vergleichsweise große Länge Verdickungen aufweisen, die eine konstante maximale Breite bzw. eine konstante maximale Dicke mit konstantem Querschnitt haben. Besondere Vorteile bieten Ausgestaltungen von Kettensonderglieder, bei denen die Gliederschenkel nur partielle Verdickungen in der Breite und/oder Dicke aufweisen. Durch das Vorsehen von nur partiellen Verdickungen im Bereich der Gliederschenkel kann ein Verklemmen oder Verklanken der Kettensonderglieder mit den an diesen angeschlossenen Normalkettengliedern weitestgehend unterbunden werden. Besonders vorteilhaft ist hierzu, wenn die partiellen Verdickungen von den Gliedbögen zur maximalen Breite und/oder maximalen Dicke in der Mitte der Gliederschenkel stetig zunehmen, so daß Stoßkanten, die einer erhöhten Reibung und damit einem erhöhten Verschleiß ausgesetzt wären, vermieden werden. Bei der insbesondere bevorzugten Ausgestaltung erstrecken sich die partiellen Verdickungen mit der maximalen Breite und/oder der maximalen Dicke an den Außenseiten der Gliederschenkel über eine größere Länge als an den Innenseiten der Gliederschenkel, um ein Abrollen benachbarter und mit den Gliedbögen ineinandergreifender Normalkettenglieder und Kettenson-

derglieder zu verbessern. Die Länge des Bereichs maximaler, konstanter Dicke am Übergang der Außenseiten zu den Querseiten der Gliederschenkel der Kettensonderglieder beträgt vorzugsweise etwa 28% ± 5 % der Teilung der Kettensonderglieder. Bei entsprechenden Kettensondergliedern kann die partielle Verdickung an den Querseiten der Gliederschenkel vorteilhafterweise einen Bereich konstanter maximaler Dicke und/oder konstanter maximaler Breite aufweisen, wodurch an den Kettensondergliedern ausreichend Verschleißreserven geschaffen werden. In bevorzugter Ausgestaltung kann hierbei der Bereich konstanter Dicke die geometrische Form eines Dreiecks aufweisen, um das Abrollen der benachbarten und miteinander verbundenen Kettenglieder zusätzlich zu optimieren. Alternativ kann die geometrische Form auch einen Kreis, eine Ellipse oder Stege bilden. Weiter vorzugsweise können die Innenseiten der Gliederschenkel der Kettensonderglieder gekrümmt, vorzugsweise elliptisch gekrümmt ausgebildet sein, wobei die maximale Innenbreite an den Innenseiten von den Gliederbögen zur Mitte der Gliederschenkel zunimmt, vorzugsweise um etwa 11% ± 5% zunimmt. Durch diese Maßnahme kann der mit den partiellen Verdickungen bewirkten Versteifung der Kettensonderglieder entgegengewirkt und die Elastizität der Kettensonderglieder erhalten bleiben, um Zugkraftspitzen elastisch auffangen zu können.

Die maximale Innenbreite an der Mitte der Gliederschenkel kann insbesondere geringfügig größer als die maximale Dicke der Kettensonderglieder ausgeführt werden, um die Hobelkette auch bei unmittelbar miteinander verbunden Kettensondergliedern verklankungsfrei auszuführen. Weiter vorzugsweise können die Außenseiten der Gliederschenkel vom Übergang der Gliederbögen bis zu den partiellen Verdickungen gekrümmt oder bauchig, insbesondere S-förmig gekrümmt ausgebildet sein, um auch hierdurch Verklankungen der Kettensonderglieder mit den Normalkettengliedern entgegenzuwirken. Der Krümmungsradius der S-förmigen Krümmung unmittelbar am Übergang zu dem Bereich konstanter, maximaler Breite kann an den Außenseiten insbesondere etwa dem Durchmesser (Drahtdurchmesser) der Kettengliederbögen ± 10% entsprechen. Der Krümmungsradius der Außenseiten am Übergang von den Kettengliederbögen auf die Kettengliederschenkel sollte bei den Kettensondergliedern möglichst groß gewählt werden, um einen annähernd glatten Übergang zu schaffen und Stoßkanten zu vermeiden.

Die Erfindung wird nun unter Bezugnahme auf die schematische Zeichnung weiter erläutert. In der Zeichnung zeigen:

Fig. 1A     ein zweiteiliges Kettenschloßglied in Seitenansicht;

Fig. 1B     das Kettenschloß aus Fig. 1A in Draufsicht;

Fig. 2A     ein Kettensonderglied gemäß einer ersten erfindungsgemäßen Ausführungsform in Seitenansicht;

Fig. 2B     das Kettensonderglied aus Fig. 2A in Draufsicht;

Fig. 3      ein Ausführungsbeispiel für einen erfindungsgemäßen Hobelkettenstrang;

Fig. 4      ein Ausführungsbeispiel für einen erfindungsgemäßen Hobelkettenstrang mit Kettensondergliedern gemäß einer zweiten erfindungsgemäßen Ausführungsform;

Fig. 5A     ein Kettensonderglied gemäß einer zweiten erfindungsgemäßen Ausführungsform in Seitenansicht;

Fig. 5B     das Kettensonderglied aus Fig. 5A in Draufsicht; und

Fig. 6      eine Schnittansicht entlang VI-VI in Fig. 5A.

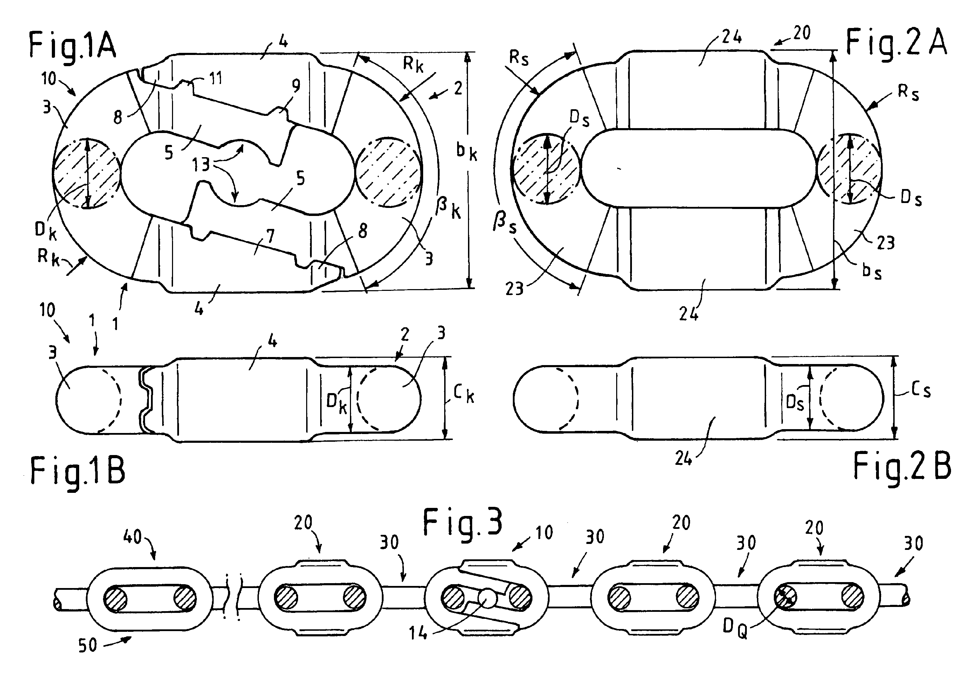

Fig. 1A und Fig. 1B zeigen schematisch in Seitenansicht und in Draufsicht ein zweiteiliges Kettenschloßglied 10 mit identisch zueinander ausgebildeten und spiegelverkehrt miteinander verriegeltem ersten Kettenschloßteil 1 und zweiten Kettenschloßteil 2, die jedes zwei Kettenschloßgliedbögen 3 sowie je einen Außenschenkel 4 und einen Innenschenkel 5 aufweisen. Die Außenschenkel 4 der Kettenschloßteile 1, 2 haben wenigstens zwei Haltezähne 7, 8, die mit Riegelvorsprüngen 9, 11 an den Innenschenkeln 5 des jeweils anderen Kettenschloßteiles 2, 1 für eine zugfeste Verriegelung beider Kettenschloßteile 1, 2 zusammenwirken. Die Teilungs- bzw. Verriegelungsebene des Kettenschloßgliedes 10 liegt mithin in seinen von Außen- und Innenschenkeln 4, 5 gebildeten Schenkeln. Die in Fig. 1A und Fig. 1B gezeigte Schließstellung des Kettenschloßgliedes 10 wird mittels eines Verriegelungselementes (14, Fig. 3) gesichert, welches in eine zylindrische Aufnahme 13 an den Innenschenkeln 5 der Kettenschloßteile 1, 2 eingreift und die Schließstellung arretiert. Das Kettenschloßglied 10 hat eine Außenbreite $b_K$ und eine Dicke $c_K$ sowie einen kreisrunden Drahtquerschnitt mit dem Durchmesser $D_k$ im Bereich der Kettenschloßgliedbögen 3, der kleiner ist als die Dicke $c_K$. Ferner hat jeder Kettenschloßgliedbogen 3 der beiden Kettenschloßteile 1, 2 im Bugbereich einen äußeren, hier mit $R_k$ bezeichneten Krümmungsradius, der sich über einen Bogenbereich $\beta_K$ von etwa 140° mit dem konstanten Durchmesser $D_K$ erstreckt.

Das in Seitenansicht und in Draufsicht in Fig. 2A und 2B gezeigte Kettensonderglied 20 ist ein geschlossenes, vorzugsweise geschmiedetes, einstückiges Kettenglied mit zwei Gliederschenkeln 24, die mittels zweier Gliederbögen 23 miteinander verbunden sind. Die Gliederbögen 23 haben einen kreisrunden Querschnitt mit dem Durchmesser $D_S$ und einen Krümmungsradius

$R_S$ am Bug bzw. Außenbogen der Gliederbögen 23, der sich über einen Bogenbereich $\beta_S$ von wiederum etwa 140° erstreckt. Die Außenbreite der Kettensonderglieder 20 an den Gliederschenkeln 24 ist in Fig. 2A mit $b_S$ und die Dicke der Gliederschenkel 24 ist in Fig. 2B mit $c_S$ bezeichnet. Es ist gut zu erkennen, daß die Gliederschenkel 24 stärker bzw. größer dimensioniert sind als der Querschnitt bzw. die Dicke $D_S$ im Bereich der Gliederbögen 23.

Erfindungsgemäß sind nun in einen Kettenstrang 50, wie in Fig. 3 beispielhaft dargestellt, sowohl vor dem Kettenschloßglied 10 als auch hinter dem Kettenschloßglied 10 jeweils wenigstens ein Kettensonderglied 20 angeordnet. Beim Ausführungsbeispiel des Kettenstrangs 50 in Fig. 3 sind hierbei unmittelbar vor und unmittelbar hinter dem Kettenschloßglied 10 in gleicher Einbaulage wie das Kettenschloßglied 10 zwei Kettensonderglieder 20 montiert, während diejenigen Kettenglieder 30, welche die Kettensonderglieder 20 untereinander und die Kettensonderglieder 20 mit dem Kettenschloßglied 10 verbinden, aus einfachen Rundkettengliedern mit z.B. gleichmäßig umlaufendem, kreisrundem Drahtquerschnitt $D_Q$ bestehen. Wie Fig. 3 weiter schematisch verdeutlicht, können in größerem Abstand vom Kettenschloßglied 10 weitere Normalkettenglieder 40 mit kreisrundem, durchgehenden Drahtquerschnitt im Kettenstrang 50 montiert sein.

Erfindungsgemäß sind die Kettensonderglieder 20 derart ausgeführt, daß die Außenbreite $b_S$ gleich oder größer ist als die Außenbreite $b_K$ des montierten Kettenschloßgliedes 10 und/oder die Dicke $C_S$ des Kettensondergliedes 20 an beiden Gliederschenkeln 24 gleich oder größer ist als die Dicke $C_K$ am Außenschenkel 4 beider Kettenschloßteile 2, 1. Im schematisch gezeigten Ausführungsbeispiel ist $b_S = b_K$ und $C_S = C_K$. Die Außenkontur der Außenschenkel 4 beider Kettenschloßteile 1, 2 entspricht mithin der Außenkontur der Gliederschenkel 24 der Kettensonderglieder 20.

Besonders bevorzugt werden Kettenstränge mit Ausführungsformen von Kettensondergliedern 20 und Kettenschloßgliedern 10, bei denen $b_S > b_K$ und/oder $C_S > C_K$ gilt, wobei nur ein geringfügiger Unterschied im Prozentbereich besteht. Sowohl bei den Kettenschloßgliedern 10 als auch bei den Kettensondergliedern 20 ist der Querschnitt in den Kettenschloßgliederbögen 3 und den Gliederbögen 23 gleich, wobei dieser Rundquerschnitt bzw. Drahtdurchmesser demjenigen Drahtdurchmesser $D_Q$ entspricht, den die Normalkettenglieder 30 bzw. 40 im Kettenstrang 50 gemäß Fig. 3 aufweisen.

Im erfindungsgemäßen Hobelkettenstrang 50 gilt mithin für alle Kettenglieder:

$$D_K = D_S = D_Q$$

$$b_S \geq b_K$$

$$C_S \geq C_K$$

$$R_S = R_K$$

$$\beta_S = \beta_K$$

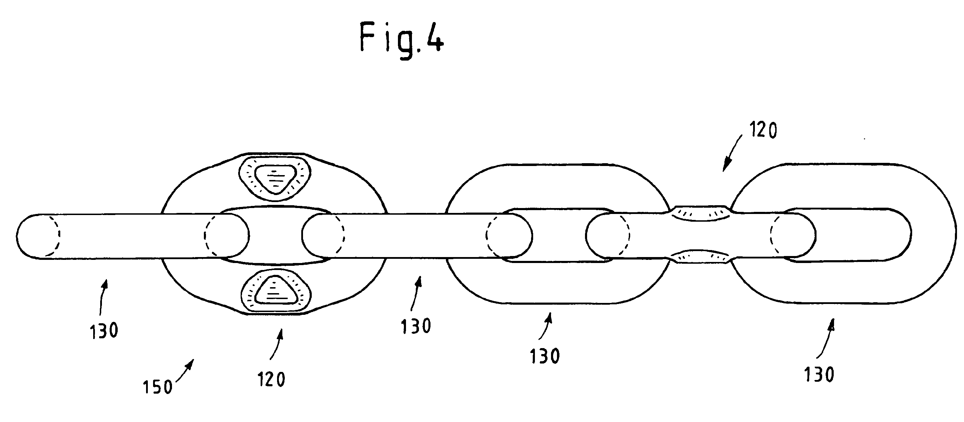

Die Fig. 4 bis 6 zeigen ein zweites Ausführungsbeispiel einer Hobelkette 150 mit gegenüber dem ersten Ausführungsbeispiel veränderten Kettensondergliedern, wobei gleiche Bauteile mit um 100 erhöhten Bezugszeichen und gleiche Kettengliedgrößen mit einem "'" versehen sind. Das Kettenschloßglied für die Hobelkette 150 gemäß dem zweiten Ausführungsbeispiel ist nicht dargestellt und kann die Ausgestaltung gemäß Fig. 1A, 1B aufweisen.

Der in Fig. 4 dargestellte Abschnitt eines Hobelkettenstranges 150 weist Normalkettenglieder 130 und Sonderkettenglieder 120 auf, wobei zwischen zwei Kettensondergliedern 120 jeweils zwei Normalkettenglieder 130 angeordnet sind. Das nicht dargestellte Kettenschloßglied kann jeweils in gleicher Einbaulage wie zwei benachbarte Kettensonderglieder 120 angeordnet sein, so daß mithin jeweils ein Kettensonderglied 120 dem Kettenschloßglied vorläuft sowie nachläuft, oder zwischen dem Kettenschloßglied und dem vor- und nachlaufenden Kettensonderglied 120 sind jeweils zwei Normalkettenglieder 130 angeordnet.

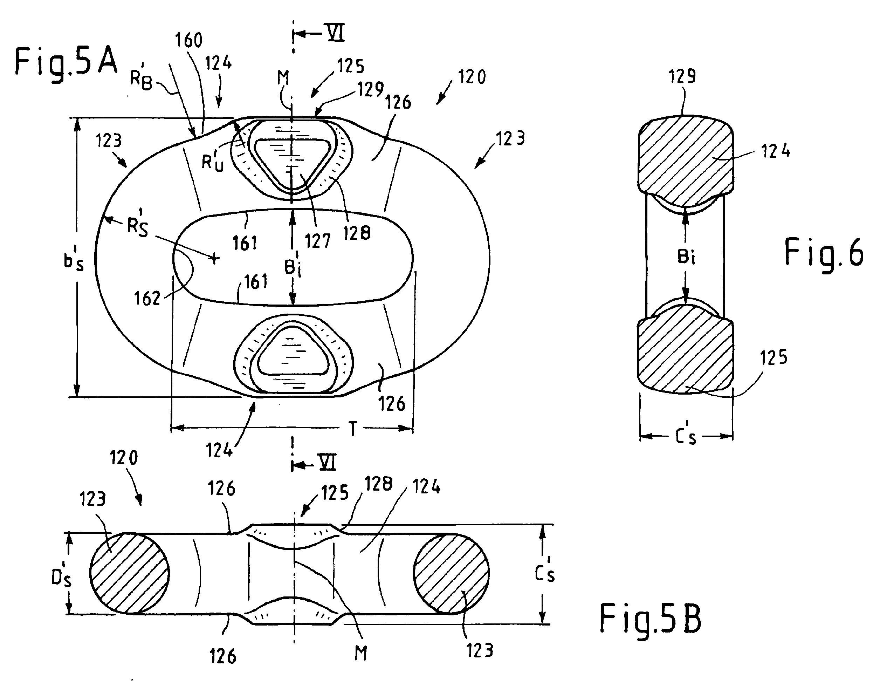

Die in Drauf- und Seitenansicht in den Fig. 5A und 5B gezeigten Kettensonderglieder 120 bestehen aus einstückigen, geschmiedeten Kettengliedern mit zwei Gliederbögen 123 mit im wesentlichen kreisrundem Durchmesser $D'_S$ und einem Krümmungsradius $R'_S$ am Bug bzw. Außenbogen der Gliederbögen 123 und die Büge erstrecken sich mit annähernd konstantem Durchmesser über einen Bogenbereich von etwa 150°. An die beiden Gliederbögen 123 schließen Gliederschenkel 124 an, welche an der Mittelebene M mit partiellen, insgesamt mit 125 bezeichneten Verdickungen versehen sind. Die partiellen Verdickungen 125 bilden nur partiell Erhöhungen gegenüber den Querseiten 126 der Gliederschenkel 124, wobei die maximale, konstante Dicke $C'_S$ gleich oder größer ist als die maximale Dicke der Kettenschloßglieder. Die maximale Dicke $C'_S$ im Bereich der partiellen Verdikkungen 125 ist etwa 25% $\pm$ 10% größer als der Durchmesser $D'_S$. Die maximale Breite $b'_S$, die wiederum gleich oder größer ist als die maximale Breite der Kettenschloßglieder, ist etwa 10% $\pm$6% größer als die Breite der Normalkettenglieder. Wie Fig. 5A gut erkennen läßt, weisen die partiellen Verdickungen 125 in Ansicht auf die Querseiten 126 der Gliederschenkel 124 die Form eines Dreiecks mit ebener Außenfläche auf, wobei der dreieckförmige Bereich mit maximaler, konstanter Dicke $C'_S$ (Fig. 5B) in Fig. 5A mit 127 gekennzeichnet ist. Der Bereich 127 maximaler konstanter Dicke verjüngt sich von den Außenseiten 129 zu den Innenseiten 161 der Gliederschenkel 124 hin beidseitig gleichmäßig entsprechend der Geometrie des Dreiecks, wodurch ein Freiziehen der Hobelkette auch bei unterschiedlichen Stellungen der die Gliederbögen 123 umfassenden Normalkettenglieder ermöglicht ist. An den Querseiten 126 erfolgt der Übergang zu den Bereichen 127 in einer kurzen, steil verlaufenden Übergangszone 128. An den Außenseiten 129 der Gliederschenkel 124 ist ein vergleichsweise langgestreckter Übergangsbereich 160 mit S-förmiger Krümmung und Wendepunkt ausgebildet, wobei der Krümmungsradius $R'_u$ zwischen dem Wendepunkt und dem Bereich konstanter maximaler Breite $b'_S$ vorzugsweise im wesentlichen dem Durchmesser $D'_S \pm 15\%$ der Gliederbögen 123 entspricht. Die Länge L des Bereichs mit konstanter Breite $b'_S$ beträgt etwa 28% $\pm$ 10 der Teilung T der Kettensonderglieder 120, d.h. dem Abstand der Innenrundungen 162 der Gliederbögen 123. Der Krümmungsradius $R'_B$ vor dem Wendepunkt ist um ein vielfaches größer als der Krümmungsradius $R'_u$, um Stoßkanten am Übergang zu vermeiden. Die Innenseiten 161 der Gliederschenkel 124 sind zwischen den Innenrundungen 162 der Gliederbögen 123 elliptisch gekrümmt ausgebildet, so daß die maximale Innenbreite $B'_i$ an der Mittelebene M der Kettensonderglieder 120 etwa 11 $\pm$ 5% größer ist als die Innenbreite am Ende der Gliederbögen 123 oder als die Innenbreite der Normalkettenglieder.

Nicht dargestellt sind Ausführungsbeispiele eines Hobelkettenstrangs, bei welchem jedes zweite, mithin sämtliche in gleicher Einbaulage wie das Kettenschloßglied im Kettenstrang enthaltene Kettenglied von einem Kettensonderglied gebildet wird/werden. Weiter nicht dargestellt ist ein Hobelkettenstrang, bei welchem eine geringe Anzahl von Kettensondergliedern in gleicher Einbaulage wie das Kettenschloßglied unmittelbar vor und unmittelbar hinter diesem im Kettenstrang montiert sind.

Für den Fachmann ergeben sich aus der vorhergehenden Beschreibung eine Reihe von Modifikationen, die in den Schutzbereich der anhängenden Ansprüche fallen sollen. Die Darstellung des Kettenschloßgliedes in den Fig. 1A, 1B und 3 ist nur beispielhaft und soll den Schutzbereich nicht beschränken. Bei anderen als dem dargestellten Kettenschloß kann daher die Kontur der Außenschenkel der Kettenschloßteile eine andere Geometrie aufweisen, der dann nach der Erfindung die Kontur der Gliederschenkel an den Kettensondergliedern angepaßt wird bzw. geringfügig größer ausgebildet wird. Ferner ist nicht dargestellt, daß Kettensonderglieder eingesetzt werden können, bei welchen die Anpassung der Außenkontur nicht beim Schmiedevorgang in den Gliederschenkeln der geschmiedeten Kettensonderglieder vorgesehen wurde, sondern bei denen z.B. auf Normalkettenglieder, wie sie in Fig. 3 oder 4 mit den Bezugszeichen 30, 40 oder 130 dargestellt sind, Verschleißstücke befestigt, aufgesetzt oder angeschweißt werden, die für die entsprechende Anpassung des Querschnitts der Gliederschenkel oder deren Vergrößerung bzw. partiellen Verdickung gegenüber den Außenschenkeln des Kettenschlosses sorgen. Solche und andere Modifikationen sollen in den Schutzbereich der anhängenden Ansprüche fallen.

## Patentansprüche

1. Hobelkettenstrang mit Horizontalkettengliedern und Vertikalkettengliedern, deren Kettengliedschenkel über Kettengliedbögen verbunden sind und die wechselweise unlösbar ineinanderfassen, und mit einem zwei Kettenstrangenden verbindenden Kettenschloßglied, das zwei miteinander zugfest verriegelbare, an den Schenkeln eine lösbare Teilungs- und Verriegelungsebene aufweisende Kettenschloßteile umfaßt, **dadurch gekennzeichnet, daß** im Kettenstrang vor und hinter dem Kettenschloßglied (10) jeweils wenigstens ein Kettensonderglied (20; 120) angeordnet ist, dessen Gliederschenkel (24; 120) eine äußere Breite ($b_S$; $b'_S$) und/oder eine äußere Dicke ($C_S$; $C'_S$) aufweisen, die gleich oder größer ist als die äußere Breite ($b_K$) bzw. äußere Dicke ($C_K$) der Schenkel (4, 5) des zusammengesetzten Kettenschloßgliedes (10).

2. Hobelkettenstrang nach Anspruch 1, **dadurch gekennzeichnet, daß** die Breite ($b_S$) und/oder die Dikke ($C_S$) der Gliederschenkel (24) der Kettensonderglieder (20) etwa 0-5%, vorzugsweise 0-2% größer ist als die entsprechende Breite ($b_K$) oder Dicke ($C_K$) des Kettenschloßgliedes (10).

3. Hobelkettenstrang nach Anspruch 1 oder 2, **dadurch gekennzeichnet, daß** jeweils genau ein Kettensonderglied (20) unmittelbar vor und unmittelbar hinter dem Kettenschloßglied (10) in gleicher Einbaulage wie dieses montiert ist oder daß mehrere, insbesondere zwei bis fünf unmittelbar vor und unmittelbar hinter dem Kettenschloßglied (10) angeordnete Kettenglieder in gleicher Einbaulage wie das Kettenschloßglied (10) aus Kettensondergliedern (20) bestehen.

4. Hobelkettenstrang nach Anspruch 1 oder 2, **dadurch gekennzeichnet, daß** alle Kettenglieder in der gleichen Einbaulage wie das Kettenschloßglied (10) aus einem Kettensonderglied (20) bestehen.

5. Hobelkettenstrang nach einem der Ansprüche 1 bis 4, **dadurch gekennzeichnet, daß** zumindest das dritte oder sechste Kettenglied vor und hinter dem Kettenschloßglied (10) aus einem Kettensonderglied (20) besteht oder daß jeweils jedes dritte Kettenglied vor und hinter dem Kettenschloßglied (10) aus einem Kettensonderglied (20) besteht.

6. Hobelkettenstrang nach einem der Ansprüche 1 bis 5, **dadurch gekennzeichnet, daß** die Kettensonderglieder (20) geschmiedet sind und/oder einstückig ausgebildet sind.

7. Hobelkettenstrang nach einem der Ansprüche 1 bis 6, **dadurch gekennzeichnet, daß** die Kettensonderglieder an den Gliederschenkeln aufgesetzte, aufgebrachte, angeschweißte oder anders befestigte Schleißstücke aufweisen.

8. Hobelkettenstrang nach einem der Ansprüche 1 bis 7, **dadurch gekennzeichnet, daß** die Gliederschenkel (24) der Kettensonderglieder (20) eine größere Höhe und/oder Dicke ($C_S$) als ihre Gliederbögen (23) aufweisen.

9. Hobelkettenstrang nach einem der Ansprüche 1 bis 8, **dadurch gekennzeichnet, daß** die Gliederbögen (23) der Kettensonderglieder (20) denselben Querschnitt, insbesondere denselben Durchmesser ($D_S$) aufweisen wie der Querschnitt bzw. der Durchmesser ($D_K$) der Gliederbögen der Kettenschloßteile (1, 2) und/oder der Kettenglieder (30; 40).

10. Hobelkettenstrang nach einem der Ansprüche 1 bis 9, **dadurch gekennzeichnet, daß** die Gliederbögen (23) der Kettensonderglieder (20) außen denselben Krümmungsradius ($R_S$) aufweisen wie der Krümmungsradius ($R_K$) des Kettenschloßgliedbogens (3) des Kettenschloßgliedes (10) und/oder der Krümmungsradius der Kettengliederbögen der Normalkettenglieder (30; 40).

11. Hobelkettenstrang nach einem der Ansprüche 1 bis 10, **dadurch gekennzeichnet, daß** die Gliederschenkel (124) der Kettensonderglieder (120) partielle Verdickungen (125) in der Breite ($b'_s$) und/oder Dicke ($C'_s$) aufweisen.

12. Hobelkettenstrang nach Anspruch 11, **dadurch gekennzeichnet, daß** die partiellen Verdickungen (125) von den Gliederbögen (123) zur maximalen Breite ($b'_s$) und/oder Dicke ($C'_s$) in der Mitte (M) der Gliederschenkel (124) stetig zunehmen.

13. Hobelkettenstrang nach Anspruch 11 oder 12, **dadurch gekennzeichnet, daß** sich die partielle Verdickung (125) mit der maximalen Breite ($b'_s$) und/oder der maximalen Dicke ($C'_s$) an den Außenseiten (129) der Gliederschenkel (124) über eine größere Länge (L) erstreckt als an den Innenseiten (161) der Gliederschenkel (124).

14. Hobelkettenstrang nach einem der Ansprüche 11 bis 13, **dadurch gekennzeichnet, daß** die partielle Verdickung (125) an den Querseiten (126) der Gliederschenkel (124) einen Bereich (127) konstanter maximaler Dicke ($C'_s$) und/oder Breite ($b'_s$) aufweist, wobei vorzugsweise der Bereich (127) konstanter maximaler Dicke ($C'_s$) die geometrische Form eines Dreiecks oder die geometrische Form eines Kreises, einer Ellipse oder von Stegen hat.

15. Hobelkettenstrang nach einem der Ansprüche 1 bis 14, **dadurch gekennzeichnet, daß** die Innenseiten (161) der Gliederschenkel (124) der Kettensonderglieder (120) gekrümmt, vorzugsweise elliptisch gekrümmt, ausgebildet sind, wobei die Innenbreite an den Innenseiten (161) von den Gliederbögen (123) zur Mitte (M) der Gliederschenkel (124) zunimmt.

16. Hobelkettenstrang nach einem der Ansprüche 11 bis 15, **dadurch gekennzeichnet, daß** die Außenseiten (129) der Gliederschenkel (124) vom Übergang der Gliederbögen (123) bis zu den partiellen Verdickungen (125) eine gekrümmte oder bauchige Übergangszone, insbesondere eine S-förmig gekrümmt Übergangszone (160) aufweisen.

**Claims**

1. Plough chain strand with horizontal chain links and vertical chain links, the chain link legs of which are connected by chain link arcs and which alternately engage one another in an intractable manner, and with a chain connector link which connects two chain strand ends which comprises two chain connector parts which can be locked to one another in a tension-proof manner **characterised in that** in the chain strand in front of and behind the chain connector link (10) is arranged at least one special chain link (20; 120), the link legs (24; 120) of which comprise an outer width ($b_S$; $b'_S$) and/or an outer thickness ($C_S$; $C'_S$), which is the same or larger than the outer width ($b_K$) or the outer thickness ($C_K$) of the legs (4, 5) of the assembled chain connector link (10).

2. Plough chain strand according to claim 1, **characterised in that** the width ($b_s$) and/or the thickness ($C_s$) of the link legs (24) of the special chain links (20) is about 0-5%, preferably 0-2% greater than the corresponding width ($b_k$) or thickness ($C_K$) of the chain connector link (10).

3. Plough chain strand according to claim 1 or 2, **characterised in that** exactly one special chain link (20) is mounted respectively immediately in front of and immediately behind the chain connector link (10) in the same installation position as this, or that several, in particular two to five chain links which are arranged immediately in front of and immediately behind the chain connector link (10) in the same installation position as the chain connector link (10) consist of special chain links (20).

4. Plough chain strand according to claim 1 or 2, **characterised in that** all chain links in the same installation position as the chain connector link (10) consist of a special chain link (20).

5. Plough chain strand according to one of claims 1 to 4, **characterised in that** at least the third or the sixth chain link in front of or behind the chain connector link (10) consists of a special chain link (20) or that each third chain link in front of and behind the chain connector link (10) consists of a special chain link (20), respectively.

6. Plough chain strand according to one of claims 1 to 5, **characterised in that** the special chain links (20) are forged and/or are formed in one piece.

7. Plough chain strand according to one of claims 1 to 6, **characterised in that** the special chain links comprise wear pieces which are attached, mounted or welded to the link legs.

8. Plough chain strand according to one of claims 1 to 7, **characterised in that** the link legs (24) of the special chain links (20) comprise a greater height and/or thickness ($C_S$) than their link arcs (23).

9. Plough chain strand according to one of claims 1 to 8, **characterised in that** the link arcs (23) of the special chain links (20) comprise the same cross section, in particular the same diameter ($D_S$) as the cross section or the diameter ($D_K$) of the link arcs of the chain connector parts (1, 2) and/or of the chain links (30; 40).

10. Plough chain strand according to one of claims 1 to 9, **characterised in that** the link arcs (23) of the special chain links (20) comprise the same radius of curvature ($R_S$) on the outside as the radius of curvature ($R_K$) of the chain connector link arc (3) of the chain connector link (10) and/or the radius of curvature of the chain link arcs of the normal chain links (30; 40).

11. Plough chain strand according to one of claims 1 to 10, **characterised in that** the link legs (124) of the special chain links (120) comprise partial swellings (125) in their width ($b'_S$) and/or thickness ($C'_S$).

12. Plough chain strand according to claim 11, **characterised in that** the partial swellings (125) increase steadily from the link arcs (123) to the maximum width ($b'_S$) and/or thickness ($C'_S$) in the center (M) of the link legs (124).

13. Plough chain strand according to claim 11 or 12, **characterised in that** the partial swelling (125) with the maximum width ($b'_S$) and/or the maximum thickness ($C'_S$) extends at the outer sides (129) of the link legs (124) over a greater length (L) than at the inner sides (161) of the link legs (124).

14. Plough chain strand according to one of claims 11 to 13, **characterised in that** the partial swelling (125) comprises a region (127) of constant maximum thickness ($C'_S$) and/or width ($b'_S$) at the transverse sides (126), whereby the region (127) of constant maximum thickness ($C'_S$) has the geometric form of a triangle or the geometric form of a circle, an ellipse or bridges.

15. Plough chain strand according to one of claims 1 to 14, **characterised in that** the inner sides (161) of the link legs (124) of the special chain links (120) are curved, preferably elliptically curved, whereby the inner width at the inner sides (161) increases from the links arcs (123) to the center (M) of the link legs (124).

16. Plough chain strand according to one of claims 11 to 15, **characterised in that** the outer sides (129) of the link legs (124) comprise a curved or bellied transition zone, in particular an s-shaped curved transition zone (160) from the transition of the link arcs (123) to the partial swellings (125).

## Revendications

1. Brin de chaîne de rabotage comprenant :

   - des maillons de chaîne horizontaux et des maillons de chaîne verticaux, dont les branches de maillon de chaîne sont reliées par l'intermédiaire de parties courbées de maillon de chaîne et qui s'imbriquent l'un dans l'autre alternativement de manière non détachable ; et
   - un maillon de fermeture de chaîne qui relie deux extrémités de brin de chaîne et qui comporte deux pièces de fermeture de chaîne pouvant être verrouillées l'une à l'autre avec résistance à la traction et présentant sur les branches un plan de séparation et de verrouillage détachable,

   **caractérisé en ce qu'**au moins un maillon spécial de chaîne (20 ; 120) est agencé respectivement dans le brin de chaîne devant et derrière le maillon de fermeture de chaîne (10), dont les branches de maillon (24 ; 120) présentent une largeur extérieure ($b_s$ ; $b'_s$) et/ou une épaisseur extérieure ($C_s$ ; $C'_s$) qui est égale ou supérieure à la largeur extérieure ($b_k$)

ou à l'épaisseur extérieure ($C_k$) des branches (4, 5) du maillon de fermeture de chaîne assemblé (10).

2. Brin de chaîne de rabotage selon la revendication 1, **caractérisé en ce que** la largeur ($b_s$) et/ou l'épaisseur ($C_s$) des branches de maillon (24) des maillons spéciaux de chaîne (20) est/sont supérieure(s) d'environ 0 à 5%, de préférence de 0 à 2%, à la largeur correspondante ($b_k$) ou à l'épaisseur correspondante ($C_k$) du maillon de fermeture de chaîne (10).

3. Brin de chaîne de rabotage selon l'une ou l'autre des revendications 1 et 2, **caractérisé en ce que** :

   - exactement un maillon spécial de chaîne (20) est monté respectivement directement devant et directement derrière le maillon de fermeture de chaîne (10) dans la même position de montage que celui-ci ; ou
   - plusieurs, en particulier deux à cinq, maillons de chaîne agencés directement devant et directement derrière le maillon de fermeture de chaîne (10) dans la même position de montage que le maillon de fermeture de chaîne (10) sont constitués de maillons spéciaux de chaîne (20).

4. Brin de chaîne de rabotage selon l'une ou l'autre des revendications 1 et 2, **caractérisé en ce que** tous les maillons de chaîne dans la même position de montage sont constitués d'un maillon spécial de chaîne (20) comme le maillon de fermeture de chaîne (10).

5. Brin de chaîne de rabotage selon l'une des revendications 1 à 4, **caractérisé en ce qu'**au moins le troisième ou le sixième maillon de chaîne devant et derrière le maillon de fermeture de chaîne (10) est constitué d'un maillon spécial de chaîne (20) ou **en ce que** respectivement chaque troisième maillon de chaîne devant et derrière le maillon de fermeture de chaîne (10) est constitué d'un maillon spécial de chaîne (20).

6. Brin de chaîne de rabotage selon l'une des revendications 1 à 5, **caractérisé en ce que** les maillons spéciaux de chaîne (20) sont forgés et/ou réalisés en un seul tenant.

7. Brin de chaîne de rabotage selon l'une des revendications 1 à 6, **caractérisé en ce que** les maillons spéciaux de chaîne présentent des pièces d'usure montées, apposées, soudées ou fixées d'une autre manière sur les branches de maillon.

8. Brin de chaîne de rabotage selon l'une des revendications 1 à 7, **caractérisé en ce que** les branches de maillon (24) des maillons spéciaux de chaîne (20) présentent une hauteur plus grande et/ou une épaisseur plus grande ($C_s$) que leurs parties courbées de maillon (23).

9. Brin de chaîne de rabotage selon l'une des revendications 1 à 8, **caractérisé en ce que** les parties courbées de maillon (23) des maillons spéciaux de chaîne (20) présentent la même section transversale, en particulier le même diamètre ($D_s$) que la section transversale ou que le diamètre ($D_k$) des parties courbées de maillon des pièces de fermeture de chaîne (1, 2) et/ou des maillons de chaîne (30 ; 40).

10. Brin de chaîne de rabotage selon l'une des revendications 1 à 9, **caractérisé en ce que** les parties courbées (23) des maillons spéciaux de chaîne (20) présentent à l'extérieur le même rayon de courbure ($R_s$) que le rayon de courbure ($R_k$) de la partie courbée (3) du maillon de fermeture de chaîne (10) et/ou que le rayon de courbure des parties courbées des maillons de chaîne normaux (30 ; 40).

11. Brin de chaîne de rabotage selon l'une des revendications 1 à 10, **caractérisé en ce que** les branches de maillon (124) des maillons spéciaux de chaîne (120) présentent des épaississements partiels (125) dans la largeur ($b'_s$) et/ou dans l'épaisseur ($C'_s$).

12. Brin de chaîne de rabotage selon la revendication 11, **caractérisé en ce que** les épaississements partiels (125) augmentent continuellement au milieu (M) des branches de maillon (124), depuis les parties courbées de maillon (123) jusque vers la largeur maximale ($b'_s$) et/ou jusque vers l'épaisseur maximale ($C'_s$).

13. Brin de chaîne de rabotage selon l'une ou l'autre des revendications 11 et 12, **caractérisé en ce que** l'épaississement partiel (125) s'étend avec la largeur maximale ($b'_s$) et/ou avec l'épaisseur maximale ($C'_s$) sur les côtés extérieurs (129) des branches de maillon (124), sur une longueur (L) qui est plus grande que les côtés intérieurs (161) des branches de maillon (124).

14. Brin de chaîne de rabotage selon l'une des revendications 11 à 13, **caractérisé en ce que** l'épaississement partiel (125) présente, sur les côtés transversaux (126) des branches de maillon (124), une région (127) d'une épaisseur maximale constante ($C'_s$) et/ou d'une largeur maximale constante ($b'_s$), la région (127) à épaisseur maximale constante ($C'_s$) ayant de préférence la forme géométrique d'un triangle ou la forme géométrique d'un cercle, d'une ellipse ou de barrettes.

15. Brin de chaîne de rabotage selon l'une des revendications 1 à 14, **caractérisé en ce que** les côtés intérieurs (161) des branches de maillon (124) des maillons spéciaux de chaîne (120) sont réalisés avec une courbure, de préférence avec une courbure elliptique, la largeur intérieure sur les côtés intérieurs (161) augmentant depuis les parties courbées de maillon (123) jusque vers le milieu (M) des branches de maillon (124).

16. Brin de chaîne de rabotage selon l'une des revendications 11 à 15, **caractérisé en ce que** les côtés extérieurs (129) des branches de maillon (124) présentent, depuis la transition des parties courbées de maillon (123) jusqu'aux épaississements partiels (125), une zone de transition courbée ou ventrue, en particulier une zone de transition (160) courbée en forme de « S ».

Fig.1A

Fig.2A

Fig.1B

Fig.2B

Fig.3

EP 1 495 239 B1

# Fig.4

EP 1 495 239 B1

Fig.6

Fig.5B

Fig.5A